Europäisches Patentamt

(19) European Patent Office

Office européen des brevets

(11) Veröffentlichungsnummer: **0 097 162**
**B1**

(12) **EUROPÄISCHE PATENTSCHRIFT**

(45) Veröffentlichungstag der Patentschrift:
**11.06.86**

(51) Int. Cl.⁴: **G 01 B 5/25, B 23 Q 17/22**

(21) Anmeldenummer: **82902347.2**

(22) Anmeldetag: **22.07.82**

(86) Internationale Anmeldenummer:
**PCT/DE 82/00153**

(87) Internationale Veröffentlichungsnummer:
**WO 83/00551 (17.02.83 Gazette 83/5)**

(54) **VORRICHTUNG ZUM GENAUEN EINRICHTEN VON WERKZEUGMASCHINEN.**

(30) Priorität: **28.07.81 DE 3129590**

(43) Veröffentlichungstag der Anmeldung:
**04.01.84 Patentblatt 84/1**

(45) Bekanntmachung des Hinweises auf die Patenterteilung:
**11.06.86 Patentblatt 86/24**

(84) Benannte Vertragsstaaten:
**BE FR**

(56) Entgegenhaltungen:
**CH - A - 413 396**
**DE - A - 1 402 994**
**DE - A - 1 477 864**
**DE - B - 1 303 702**
**DE - B - 1 962 877**
**DE - C - 224 777**
**DE - C - 664 215**
**GB - A - 1 177 322**

(73) Patentinhaber: **CHRISTOFFEL, Reinhold,**
**Glückaufstrasse 3, D-3203 Sarstedt (DE)**
Patentinhaber: **WESOLY, Heiner, Schillerstrasse 7,**
**D-3203 Sarstedt (DE)**

(72) Erfinder: **CHRISTOFFEL, Reinhold, Glückaufstrasse 3,**
**D-3203 Sarstedt (DE)**
Erfinder: **WESOLY, Heiner, Schillerstrasse 7,**
**D-3203 Sarstedt (DE)**

(74) Vertreter: **Arendt, Helmut, Dipl.-Ing., Hubertusstrasse 2,**
**D-3000 Hannover 1 (DE)**

## Beschreibung

Die Erfindung betrifft eine Vorrichtung zum genauen Einstellen der Relativlage zwischen einer Werkstückkante und der Achse der Werkzeugspindel spanender Werkzeugmaschinen mittels eines mit der Werkzeugspindel verbindbaren, während des Einstellvorgangs rotierenden und in Bezug auf das Werkstück zustellbaren, die Berührung mit der Werkstückkante elektrisch erfassenden und anzeigenden Tastkopfes mit zylindrischem Taster.

Zum genauen Einrichten von Werkzeugmaschinen mit dem Ziel, das Zentrum einer Werkzeugmaschinenspindel über dem zu bearbeitenden Werkstück genau zu ermitteln, ist es, beispielsweise durch die DE-C- 224 777, bekannt mechanisch und elektromechanisch wirkende Antastgeräte zu verwenden, die vielfach auch als Nullpunktaufnehmer oder Kantentaster bezeichnet werden. So gibt es beispielsweise ein Gerät, das mit einer optischen Anzeigevorrichtung ausgestattet ist, welche jedoch nur im Moment des Berührungskontaktes mit einer zu bearbeitenden Fläche aufleuchtet. Ein solches Gerät ist mit einer am unteren Ende befindlichen Tastkugel ausgerüstet, die beim Absenken und Berühren der Fläche das Signal auslöst.

Kantentaster gem.DE-C- 905 810 oder DE-A- 2 210 713 erreichen beim Anfahren, d.h. Positionssuche von Bezugsflächen oder -kanten mit eine Genauigkeit von ca. 0,01 mm. Hierbei wird durch leichten Fingerdruck der untere Teil des Tasters zuerst aus der Laufachse der drehenden Arbeitsspindel gedrückt. Durch langsames Zustellen an die tastende Fläche wird die oszillierende Bewegung stetig geringer. Bei Erreichen der Koaxialität von Ober- und Unterteil weicht das Unterteil entlang der Werkstückfläche aus. Die Position von angetasteter Fläche zur Achse der Arbeitsspindel entspricht dann dem Halbmesser des Tast-kopfes mit der vorgenannten Genauigkeitstoleranz. Diese genügt jedoch in vielen Fällen nicht der geforderten Einstellgenauigkeit. Außerdem werden die Meßergebnisse durch Spindelausschläge der Maschinen und Tastkopfexzentrizitäten verfälscht, da diese nicht berücksichtigt werden.

Der Erfindung liegt die Aufgabe zugrunde, eine neue Vorrichtung zum genauesten Einstellen von Werkzeugmaschinen zu schaffen, womit eine wesentlich höhere Genauigkeit der Einstellung bei geringstmöglichem Zeitaufwand erreichbar ist.

Die im Patentanspruch 1 gekennzeichnete erfindungsgemäße Lösung zeichnet sich dadurch aus, daß der Tastkopf über die Kontaktposition des Tasters mit der Kante des Werkstückes hinaus zugestellt wird, bis die Dauer der Berührung pro Umdrehung des sich drehenden Tasters mit dem Werkstück einem Drehwinkel entspricht, der größer als 180°, jedoch kleiner als 300° ist.

Am vorteilhaftesten, d.h. genauesten, ist das Zentrum der Werkzeugmaschinenspindel ausgerichtet, wenn der Berührungswinkel 210° beträgt.

Eine weitere vorteilhafte Ausbildung der Erfindung ist im Patentanspruch 3 angegeben. Als optische Anzeigeelemente eignen sich Leuchtdioden, die an der Außenseite des Gehäuses nebeneinander angeordnet sein können.

Die Schalteinrichtung umfaßt vorzugsweise vier zu einem intergrierten Schaltkreis für dieselbe Betriebsspannung zusammengefaßte, als Komparatoren geschältete Verstärker mit an den negativen Eingängen anliegenden, unterschiedlich definierten Referenzspannungen, deren positive Eingänge mit in Abhängigkeit von der Berührungsdauer des Tastkopfes mit dem Werkstück erzeugten Gleichspannungsimpulsen beaufschlagt werden, wobei die Ausgänge zweier Verstärker mit jeweils einer Leuchtdiode und der Ausgang eines Verstärkers mit einer an sich bekannten Multivibratorschaltung in Abhängigkeit von der Größe der Gleichspannungsimpulse zeitweilig ausschaltbar sind.

Weitere, die Erfindung vorteilhaft ausgestaltende Merkmale sind den abhängigen Patentansprüchen zu entnehmen.

Die Erfindung macht sich die Tatsache zunutze, daß jede Maschinenspindel innerhalb geringer Toleranzen von der theoretisch genauen Lage, beispielsweise von der Vertikalen, abweicht. Bei der Berührung einer sich drehenden Spindel mit einer Bezugskante oder -fläche ergibt sich zunächst ein ganz geringfügiger Schleifkontakt, der einem sehr kleinen Drehwinkel entspricht. Bei weiterem Zustellen des Werkstücks zur Maschinenspindel wird der Drehwinkel, innerhalb dessen der Schleifkontakt auftritt, allmählich größer. Sobald der halbe Umfang der Maschinenspindel bzw. eines koaxialen Tastkopfes das Werkstück berührt, gilt die genaue Lage der Spindel als erreicht. Aus Sicherheitsgründen werden jedoch noch dreißig Drehwinkelgrade hinzugegeben, so daß bei einem Schleifkontakt entsprechend 210° Drehwinkel die Maschine als am besten eingestellt gilt. Mit dem Tastkopf wird die Bezugsfläche oder -kante zunächst so weit angefahren, bis eine Berührung entsprechend ca. 130° Drehwinkel erreicht sind. Dann beginnt eine der Dioden zu leuchten. Bei weiterem Anfahren wird die zweite Leuchtdiode zugeschaltet. In diesem Moment ist eine Berührung entsprechend 210° Drehwinkel erreicht. Sollte unvorsichtigerweise eine noch weitere Zustellung vorgenommen worden sein, die einer Berührung von 300° Drehwinkel entspricht, beginnen beide Dioden rhythmisch zu blinken. Dies ist dann das Zeichen, daß das Werkstück zu dicht an die Spindel herangefahren wurde und die Gefahr einer unzulässigen Kraft auf die Spindel bzw. auf das einzusetzende Werkzeug ausgeübt wird. In diesem Fall muß das Einstellen noch einmal wiederholt werden. Die auf diese Weise erreichbare Genauigkeit entspricht einer Toleranz von ± 0,002 mm, d.h. die bisher erreichbaren Ergebnisse werden um den Faktor 5 verbessert.

Ein weiterer Vorzug liegt darin, daß die Einstellgenauigkeit auch bei geringem Spindelschlag der Werkzeugmaschine innerhalb der oben angegebenen Toleranzen möglich ist. Die Wiederkehrgenauigkeit ist durch die beiden Leuchtdioden unter Ausschluß der menschlichen Reaktionszeit absolut definiert. Die Zündzeit der nacheinander zündenden Leuchtdioden definiert die Einstellgenauigkeit.

In der Zeichnung ist ein Ausführungsbeispiel der Erfindung schematisch dargestellt und nachstehend erläutert.

Es zeigen:

Figur 1 die Kantentastvorrichtung in schaubildlicher Darstellung und

Figur 2 die in dem Gehäuse der Kantentastvorrichtung eingesetzte elektronische Schaltung.

Ein hohler Schaft mit einem genau geschliffenen Aufnahmebereich 1a zum Einspannen in die Werkzeugspindel einer Maschine ist an seinem unteren Ende mit einem Tastkopf 2 zum Anfahren an Körperkanten und Bezugsflächen ausgerüstet. Der Tastkopf 2 ist elektrisch gegen den Schaft 1 isoliert und weist einen Taster 2a, 2b aus einem absatzartigen Bund 2a und einer stiftförmigen Fortsetzung 2b zum Eintasten in Öffnungen auf.

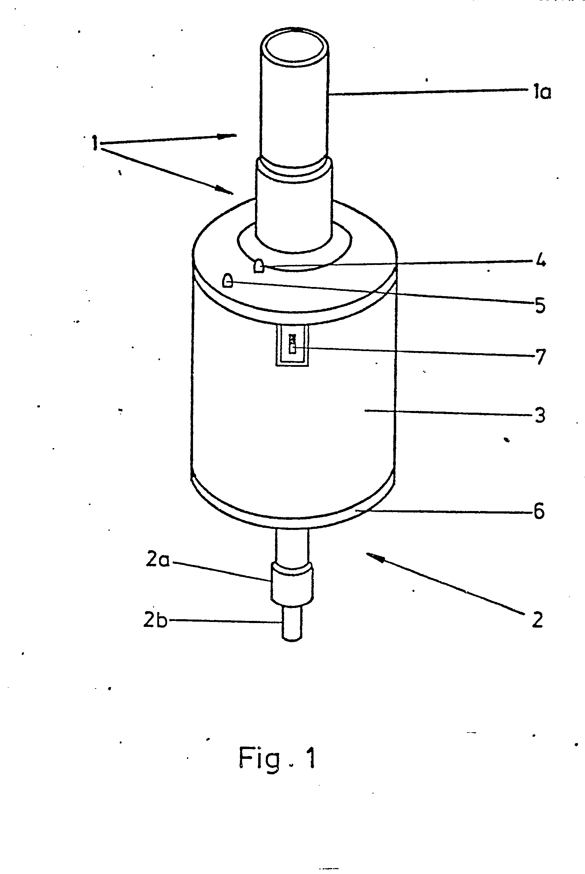

Der Schaft 1 durchsetzt ein Gehäuse 3 aus Kunststoff, in welchem Batterien angeordnet sind. Die obere Stirnseite des Gehäuses 3 zeigt die beiden Leuchtdioden 4 und 5. Das Bodenteil 6 aus Kunststoff ist zum Wechseln der Batterien abschraubbar gestaltet. Mit 7 ist in Figur 1 der Schalter zum Ein- und Ausschalten des Gerätes bezeichnet.

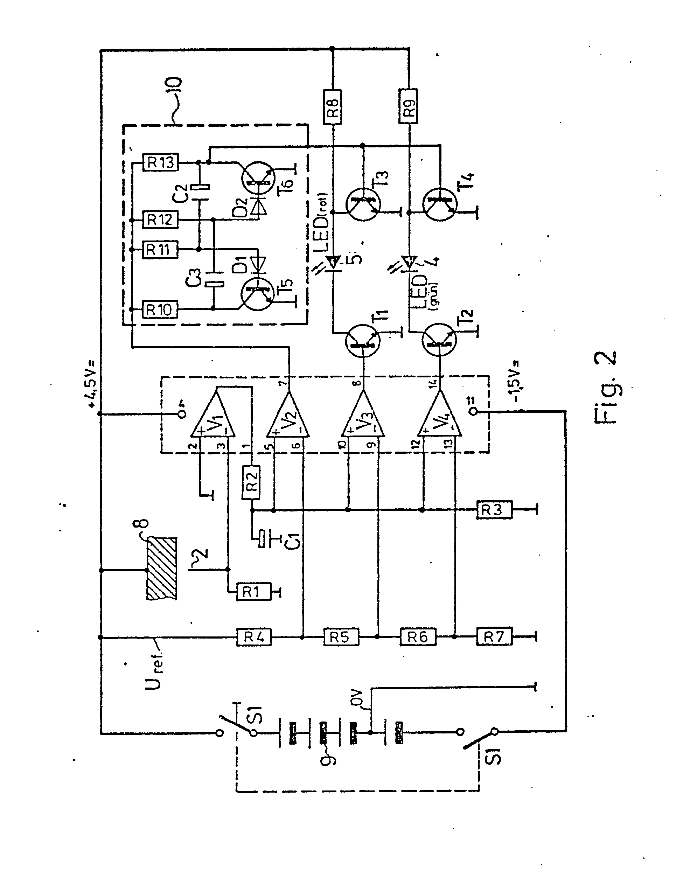

Mit dem Tastkopf 2 wird das Werkstück 8 (Figur 2) angefahren, nachdem zuvor über den Schalter S1 (Figur 2) mit zwei Schaltbrücken das Gerät eingeschaltet wurde, d.h. eine Betriebsspannung der Batteriezellen 9 angelegt wurde. Über das Maschinenfutter gelangt eine positive Spannung an das Werkstück.

Die Verstärker V1 bis V4 sind zu einem integrierten Schaltkreis zusammengefaßt, sie erhalten dieselbe Betriebsspannung. Die Zusammenfassung ist durch die Umrandung in unterbrochener Strichführung deutlich gemacht.

Die Verstärker V1 - V4 sind als Komparatoren ausgebildet. Sie reagieren auf definierte Referenzspannungen, d.h. nach dem überschreiten der jeweiligen Referenzspannung schaltet ein Verstärker um.

Berührt der sich drehende Tastkopf 2 mit seinem Taster 2a bzw. 2b das Werkstück 8, so bekommt zunächst der Verstärker V1 Spannungsimpulse. Die Impulse werden über die jeweiligen Impulsbreiten voll verstärkt und zwar über die Betriebsspannung, die zerhackt und dem Kondensator C1 zugeführt wird. Hier wird je nach Impulsbreite eine hohe oder niedrige Gleichspannung erzeugt, die an den positiven Eingängen der Verstärker V2, V3 und V4 anliegt. Die negativen Eingänge dieser Verstärker liegen an den definierten Referenzspannungen, entsprechend den unterschiedlichen Spannungsabfällen an den Widerständen R4 - R7. Überschreitet die Spannung des jeweiligen positiven Eingangs 5, 10, 12 den Anteil des negativen Eingangs 6, 9, 13, d.h. die jeweilige Referenzspannung, dann schalten die als Komparatoren geschalteten Verstärker um. Zunächst spricht der Verstärker V4 an, es folgt der Verstärker V3, da dessen Referenzspannung höher ist. Bei weiterer Erhöhung der positiven Eingangsspannung durch weiteres Aufladen des Kondensators C1 folgt schließlich der Verstärker V2. Die Verstärker geben die Betriebsspannung in der vorgenannten Reihenfolge weiter an die Transistoren T2 bzw.T1 und an eine Multivibratorschaltung 10.

Der Verstärker V4 schaltet bei einer Tasterberührung pro Umdrehung entsprechend einem Drehwinkel von ca. 130°. In diesem Moment zündet die grüne Leuchtdiode 4. Bei einer mit der Dauer zunehmenden Tasterberührung, und zwar nach Überschreiten eines Berührungsdrehwinkels von 210°, wird der positive Eingang des Verstärkers V3 so hoch, daß die Referenzspannung überschritten und die Leuchtdiode 5 (rot) zündet. Bei einem Berührungswinkel von ca. 300° schaltet der Verstärker V2 den Multivibrator 10 ein, der dafür sorgt, daß die Dioden 4 und 5 in einem bestimmten Rhythmus über die Transistoren T3 und T4 aus- und eingeschaltet werden und damit Blinksignale erzeugen.

In Abhängigkeit von der Dauer der Werkstückberührung des Tasters pro Umdrehung wird also der Kondensator C1 mehr oder weniger aufgeladen, so daß die positiven Eingänge für die Verstärker V4, V3 und V2 mehr oder weniger hoch sind und entsprechend die Referenzspannung überschreiten.

Wesentlich bei der vorliegenden Vorrichtung ist, daß die durch Toleranzen bestimmten Abweichungen des Tastkopfes, beispielsweise von der Vertikalen, impulsartige Berührungen beim Anfahren an eine Werkstückkante oder einer Bezugsfläche erzeugen. Diese Abweichungen werden also für die Berührungsanzeigen ausgenutzt. Je geringer die Abweichungen von der theoretisch genauen Lage sind, desto geringer wird die Zeitdifferenz zwischen dem aufeinanderfolgenden Einschalten der Leuchtdioden und dem Übergang zum Blinkrhythmus.

Es kann somit unabhängig von dem Grad der Abweichungen von der gewünschten theoretisch genauen Lage jede Maschinenspindel mit Hilfe des erfindungsgemäßen Gerätes ausgerichtet werden. Bei einer Werkzeugmaschine mit einer Abweichung null der Maschinenspindel von der gewünschten Ausrichtung würde die Zeitdifferenz zwischen dem aufeinanderfolgenden Einschalten der Leuchtdioden und dem Übergang zum Blinkrhythmus gegen null gehen. Auf diese Weise sind auch äußerst geringe Abweichungen einer Maschinenspindel von der absolut genauen Lage erfaßbar.

## Patentansprüche

1. Vorrichtung zum genauen Einstellen der Relativlage zwischen einer Werkstückkante und der Achse der-Werkstückspindel spanender Werkzeugmaschinen mittels eines mit der Werkzeugspindel verbindbaren, während des Einstellvorgangs rotierenden und in Bezug auf das Werkstück zustellbaren, die Berührung mit der Werkstückkante elektrisch erfassenden und anzeigenden Tastkopfes (2) mit zylindrischem Taster, dadurch gekennzeichnet, daß der Tastkopf (2) über die Kontaktposition des Tasters (2a, 2b) mit der Kante des Werkstückes (8) hinaus zugestellt wird, bis die erfaßte Dauer der Berührung pro Umdrehung des sich drehenden Tasters (2a, 2b) mit dem Werkstück (8) einem Drehwinkel (α) entspricht, der gröner als 180°, jedoch kleiner als 300° ist.

2. Vorrichtung nach Anspruch 1, dadurch gekennzeichnet, daß der Tastkopf (2) in Bezug auf die Werkstückkante so weit zugestellt wird, bis die erfaßte Berührungsdauer pro Umdrehung des Tasters (2a, 2b) dem Drehwinkel (α) von 210° entspricht.

3. Vorrichtung nach Anspruch 1 oder 2, gekennzeichnet durch ein mit einer elektrischen Spannungsquelle (9) und einer elektrischen Schalteinrichtung für optische Anzeigeelemente ausgerüstetes Gehäuse (3), welches von einem mit einem Pol der Spannungsquelle verbundenen Hohlschaft (1) an seinem werkzeugmaschinenseitigen Ende mit einem genau geschliffenen Aufnahmebereich (1a) zum Einspannen in die Werkzeugspindel versehen ist und den an seinem freien Ende gegen den Hohlschaft (1) elektrisch isolierten und mit dem Eingang eines ersten Verstärkers (VI) der elektrischen Schalteinrichtung verbundenen Taster (2a, 2b) trägt.

4. Vorrichtung nach einem der Ansprüche 1 bis 3, dadurch gekennzeichnet, daß der Taster eine absatzförmige Verjüngung (2b) zum Eintasten in Öffnungen aufweist.

5. Vorrichtung nach Anspruch 3 oder 4, dadurch gekennzeichnet, daß als optische Anzeigeelemente zwei Leuchtdioden (4, 5) eingesetzt sind.

6. Vorrichtung nach einem oder mehreren der Ansprüche 3 bis 5, dadurch gekennzeichnet, daß die Schalteinrichtung zu einem integrierten Schaltkreis für dieselbe Betriebsspannung zusammengefaßte, als Komparatoren geschaltete Verstärker (V1-V4) aufweist, von denen ein erster Verstärker (V1) mit seinem positiven Eingang mit dem Tastkopf (2) verbunden ist, während an den negativen Eingängen der übrigen Verstärker (V2-V4) unterschiedlich definierte Referenzspannungen anliegen und die positiven Eingänge dieser Verstärker (V2-V4) mit vom ersten Verstärker (V1) in Abhängigkeit von der Berührungsdauer pro Umdrehung des Tasters (2a, 2b) mit dem Werkstück (8) erzeugten Gleichspannungsimpulsen beaufschlagt werden, wobei die Ausgänge zweier Verstärker (V3, V4) mit jeweils einer Leuchtdiode (4, 5) und der Ausgang eines weiteren Verstärkers (V2) mit einer Multivibratorschaltung (10) verbunden sind, wobei die Leuchtdioden (4,5) über eine Transistorverbindung (T3, T4) mit der Multivibratorschaltung (10) in Abhängigkeit von der Größe der Gleichspannungsimpulse von dieser zeitweilig ausschaltbar sind.

7. Vorrichtung nach Anspruch 6, dadurch gekennzeichnet, daß der erste Verstärker (V1) unmittelbar mit den Impulsen des Tastkopfes (2) beaufschlagbar ist, diese Impulse verstärkt und einem Kondensator (C1) zuführt.

8. Vorrichtung nach Anspruch 7, dadurch gekennzeichnet, daß die durch den Kondensator (C1) erzeugte Gleichspannung an den positiven Eingängen der mit den Leuchtdioden (4, 5,) bzw. der Multivibratorspannung (10) verbundenen Verstärker anliegt.

9. Vorrichtung nach einem oder mehreren der Ansprüche 6 bis 8, dadurch gekennzeichnet, daß die definierten Referenzspannungen unterschiedlichen Spannungsabfällen der Betriebsspannung an entsprechenden Widerständen (R4-R7) entsprechen.

## Claims

An arrangement for precise adjustment of the relative position of a workpiece edge and the axis of the machine tool which holds the workpiece spindle, the adjustment being performed by means of a sensing head which is capable of being connected with the spindle for the tool, and the sensing head having a cylindrical sensor and electrically determining and indicating contact with the workpiece edge, the sensing head rotating during the adjustment procedure and being designed for displacement relative to the workpiece, the arrangement being characterized in that the sensing head (2) is moved beyond the position of contact between the sensor (2a, 2b) and the edge of the workpiece (8) until the measured duration of contact per revolution of the rotating sensor (2a, 2b) with the workpiece (8) corresponds to a rotational angle (α) greater than 180° but less than 300°.

2. An arrangement according to claim 1, characterized in that the sensing head (2) is displaced in relation to the workpiece edge until the measured duration of contact per revolution of the sensor (2a, 2b) corresponds to a rotational angle (α) of 210°.

3. An arrangement according to claim 1 or 2, characterized by a housing (3) equipped with a voltage source (9) and an electrical switching arrangement for optical indicating elements, the housing (3) also being provided with a hollow shaft (1) which is connected with a pole of the voltage source, and the hollow shaft (1) having an accurately ground engagement region (1a) at the end thereof adjacent the machine tool in order to permit insertion of the hollow shaft (1) in the tool spindle, the hollow shaft (1) carrying the sensor (2a, 2b), and the sensor (2a, 2b) being connected with the input of a first amplifier (V1) of the electrical switching-arrangement and having a free end which is electrically insulated from the hollow shaft (1).

4. An arrangement according to one of the claims 1-3, characterized in that the sensor has a step-like reduction (2b) in cross section to permit sensing in openings.

5. An arrangement according to claim 3 or 4, characterized in that two light-emitting diodes (4, 5) are used as optical indicating elements.

6. An arrangement according to one or more of the claims 3-5, characterized in that the switching arrangement has amplifiers (V1-V4) which are incorporated in an integrated circuit for a common operating voltage and are connected as comparators, the positive input of a first amplifier (V1) being connected with the sensing head (2), and the negative inputs of the remaining amplifiers (V2-V4) being supplied with different reference voltages while the positive inputs of these amplifiers (V2-V4) are supplied with d.c. voltage pulses generated by the first amplifier (V1) in dependence upon the duration of contact per revolution of the sensor (2a, 2b) with the workpiece (8), the outputs of two amplifiers (V3, V4) each being connected with a light-emitting diode (4, 5) and the output of a further amplifier (V2) being connected with a multivibrator circuit (10), and the light-emitting diodes (4, 5) being arranged to be periodically switched off by the multivibrator circuit (10) via a transistor connection (T3,T4) in dependence upon the magnitude of the d.c. voltage pulses.

7. An arrangement according to claim 6, characterized in that the first amplifier (V1) is arranged to directly receive the pulses from the sensing head (2), the sensing head (2) amplifying these pulses and transmitting the same to a condenser (C1).

8. An arrangement according to claim 7, characterized in that the d.c. voltage generated by the condenser (C1) is applied to the positive inputs of the amplifiers connected with the light-emitting diodes (4, 5) and the multivibrator circuit (10).

9. An arrangement according to one or more of the claims 6-8, characterized in that the reference voltages correspond to different voltage drops of the operating voltage across respective resistors (R4-R7).

## Revendications

1. Dispositif en vue de régler avec précision la position relative entre un bord d'une pièce de travail et l'axe des machines-outils à broche au moyen d'une tête de palpage comportant un palpeur cylindrique, pouvant être assemblée à la broche de la machine-outil, tournant au cours du processus de réglage et pouvant avancer par rapport à la pièce de travail, tout en déterminant et en indiquant électriquement le contact avec le bord de la pièce de travail, caractérisé en ce que la tête de palpage (2) avance au-delà de la position de contact du palpeur (2a, 2b) avec le bord de la pièce de travail (8) jusqu'à ce que la durée de contact atteinte par révolution du palpeur en rotation (2a, 2b) avec la pièce de travail (8) corresponde à un angle de rotation qui est supérieur à 180°, mais inférieur à 300°.

2. Dispositif selon la revendication 1, caractérisé en ce que la tête de palpage (2) avance par rapport au bord de la pièce de travail jusqu'à ce que la durée de contact atteinte par révolution du palpeur (2a, 2b) corresponde à un angle de rotation ($\alpha$) de 210°.

3. Dispositif suivant la revendication 1 ou 2, caractérisé en ce qu'il comporte un logement (3) équipé d'une source de tension électrique (9) et d'un dispositif de commutation électrique pour éléments indicateurs optiques, ce logement étant pourvu, à son extrémité située du côte de la machine-outil, d'un arbre creux (1) raccordé à un pôle de la source de tension et comportant une zone de prise (1a) rectifiée avec precision pour être serrée dans la broche de la machine-outil, ce logement supportant également, à son extrémité libre opposée à l'arbre creux (1) le palpeur (2a,2b) isolé électriquement et raccordé à l'entrée d'un premier amplificateur (V1) du dispositif de commutation électrique.

4. Dispositif suivant une des revendications 1 à 3, caractérisé en ce que le palpeur comporte une partie rétrécie en saillie (2b) pour effectuer un palpage dans des ouvertures.

5. Dispositif suivant la revendication 3 ou 4, caractérisé en ce que, comme éléments indicateurs optiques, on utilise deux diodes électroluminescentes (4, 5).

6. Dispositif suivant une ou plusieurs des revendications 3 à 5, caractérisé en ce que le dispositif de commutation comporte des amplificateurs (V1-V4) rassemblés en un circuit de commutation intégré pour la même tension de fonctionnement et montés à la manière de comparateurs, un premier amplificateur (V1) étant raccordé, à son entrée positive, à la tête de palpage (2), tandis que, aux entrées négatives des autres amplificateurs (V2-V4), sont appliquées des tensions de références définies différemment, les entrées positives de ces amplificateurs (V2-V4) étant sollicitées par des impulsions de tension continue produites par le premier amplificateur (V1) en fonction de la durée de contact par révolution du palpeur (2a, 2b) avec la pièce de travail (8), les sorties de deux amplificateurs (V3, V4) étant chaque fois raccordées à une diode électroluminescente (4, 5) et la sortie d'un autre amplificateur (V2) étant raccordée à un multivibrateur (10), les diodes électroluminescentes (4, 5) pouvant être mises momentanément hors circuit, via un raccordement à transistors (T3, T4) avec le multivibrateur (10) en fonction de l'amplitude des impulsions de tension continue de ce dernier.

7. Dispositif suivant la revendication 6, caractérisé en ce que le premier amplificateur (V1) peut être sollicité directement par les impulsions de la tête de palpage (2), cet amplificateur amplifiant ces impulsions pour les acheminer à un condensateur (C1).

8. Dispositif suivant la revendication 7, caractérisé en ce que la tension continue produite par le condensateur (C1) est appliquée aux entrées positives des amplificateurs raccordés aux diodes électroluminescentes (4, 5) ou au multivibrateur (10).

9. Dispositif suivant une ou plusieurs des revendications 6 à 8, caractérisé en ce que les tensions de référence définies correspondent à des chutes de tension différentes de la tension de fonctionnement dans des résistances correspondantes (R4-R7).

Fig . 1

Fig. 2

0 097 162